# EUROPEAN PATENT APPLICATION

(11) **EP 2 234 365 A1**
(43) Date of publication of application: **29.09.2010**
(21) Application number: 08870253.5
(22) Date of filing: 17.11.2008
(51) Int. Cl.: H04L 29/06

(54) **METHOD AND SYSTEM FOR DISTRIBUTING THE LOCAL TRANSPORT ADDRESS AND MEDIA GATEWAY AND MEDIA GATEWAY CONTROLLER**

(30) Priority: 28.12.2007 CN 200710305678
(71) Applicant: Huawei Technologies Co., Ltd., Longgang District, Shenzhen Guangdong 518129 (CN)
(72) Inventor: ZHU, Ning, Guangdong 518129 (CN)
(74) Representative: Pfenning, Meinig & Partner GbR
(86) International application number: PCT/CN2008/073086
(87) International publication number: WO 2009/086754

(57) **Abstract**

A method for distributing local transport addresses is provided, which includes: receiving an extended H.248 protocol message including information of local transport addresses to be distributed and domain identifiers (IDs) of network domains corresponding to the local transport addresses to be distributed; and distributing the local transport addresses in the network domains corresponding to the domain IDs, where the distributed local transport addresses correspond to the information of local transport addresses to be distributed. A media gateway (MGW), a media gateway controller (MGC), a system for distributing local transport addresses, a computer program product, and a computer readable storage medium for executing the method are also provided. Therefore, the MGW can distribute the local transport addresses in a plurality of network domains for the terminal at the same time, so that the terminal can communicate with a plurality of networks at the same time, thus enhancing the utilization efficiency of the terminal.

## Description

This application claims priority to Chinese Patent Application No. 200710305678.0, filed on December 28, 2008 and entitled "METHOD FOR DISTRIBUTING LOCAL TRANSPORT ADDRESS, MEDIA GATEWAY AND MEDIA GATEWAY CONTROLLER", which is incorporated herein by reference in its entirety.

### FIELD OF THE TECHNOLOGY

The present invention relates to the field of network technology, and more particularly to a method for distributing local transport addresses, a media gateway (MGW), and a media gateway controller (MGC).

### BACKGROUND

The next generation network (NGN) is generated by converging a Time Division Multiplex (TDM)-based Public Switched Telephone Network (PSTN) with a packet-based network based on an Internet Protocol/Asynchronous Transfer Mode (IP/ATM), and enables comprehensive services for information such as audio, video, and data over the same network, which symbolizes the arrival of the telecommunication network age in a new generation.

The existing NGN mainly includes one or more MGWs and one or more MGCs. To realize the transmission of a packet among different networks, a common method involves a network address/port translation technique. The network address translation (NAT) is a standard technique for mapping one address domain, such as a specific Intranet, to another address domain, such as Internet. The NAT traversal technique derived from the NAT technique means that a terminal on a private network adopts a private IP address to access a public network through an NAT/firewall (FW) at egress. Currently, the most commonly used two NAT traversal modes include a Simple Traversal of User Datagram Protocol through Network Address Translators (STUN) mode and a Traversal Using Relay NAT (TURN) mode. In addition, an Interactive Connectivity Establishment (ICE) mode that integrates the STUN mode and the TURN mode is also adopted.

When the MGC and the MGW perform the NAT traversal in ICE mode, an object that should be collected by a session initiator include a local transport address and a derived transport address. The local transport address is usually obtained by binding a port to a physical interface/virtual interface on a host. The session initiator also visits an STUN server and a TURN server. For each local transport address, the session initiator obtains a group of derived transport addresses from the server. A local transport address is also referred to as a host candidate. The derived transport address includes a server reflexive candidate and a relayed candidate. Both parties of the session exchange their respective information about the local transport address and the derived transport address, generate address pairs of the local and peer ends, perform conduction detection on each address according to a priority level, and select a conductive address that has the highest priority level to perform media transmission.

During the implementation of the present invention, the inventor found that the prior art at least has the following defects. When the MGC and the MGW perform the NAT traversal in ICE mode, the local transport address, that is, the host candidate needs to be collected. If a bearer layer of the MGW is connected with a plurality of IP networks, or is connected to a plurality of virtual private networks (VPNs), it is required to distribute the local transport addresses among the plurality of IP networks and/or the plurality of VPNs for conduction detection. The MGC does not notify the MGW of the network domains where the local transport addresses should be distributed, so that a terminal of the MGW in the prior art can only distribute the local transport addresses in default network domains or network domains pre-designated by the MGC, instead of distributing the local transport addresses in non-default network domains or network domains not pre-designated by the MGC. As a result, the terminal cannot communicate with other non-default network domains or network domains not pre-designated by the MGC, thereby reducing the utilization efficiency of the terminal.

### SUMMARY

The embodiment of present aspect is directed to a method for distributing local transport addresses, an MGW, and an MGC. Through the technical solution provided in the embodiments of the present aspect, the MGW is enabled to distribute local transport addresses among a plurality of network domains for a terminal, thereby enabling the terminal to communicate with a plurality of networks at the same time and enhancing the utilization efficiency of the terminal.

The object in the embodiments of the present aspect is realized through the following technical solutions.

The embodiment of present aspect provides a method for distributing local transport addresses, which includes the following steps.

An extended H.248 protocol message is received, where the H.248 protocol message includes information of local transport addresses to be distributed and domain identifiers (IDs) of network domains corresponding to the local transport addresses to be distributed.

The local transport addresses are distributed in the network domains corresponding to the domain IDs, and the distributed local transport addresses correspond to the information of the local transport addresses to be distributed.

The embodiment of present aspect also provides a computer program product, which includes a computer program code. When the computer program code is executed by a computer, the computer program code enables the computer to execute any step in the method for distributing local transport addresses.

The embodiment of present aspect also provides a computer readable storage medium, which stores a computer program code. When the computer program code is executed by a computer, the computer program code enables the computer to execute any step in the method for distributing local transport addresses.

The embodiment of present aspect also provides an MGC, which includes a message generating unit and a message sending unit.

The message generating unit is configured to generate an extended H.248 protocol message, where the extended H.248 protocol message includes information of local transport addresses to be distributed and domain IDs of network domains corresponding to the local transport addresses to be distributed.

The message sending unit is configured to send the extended H.248 protocol message generated by the message generating unit.

The embodiment of present aspect also provides an MGW, which includes a message receiving unit and a message processing unit.

The message receiving unit is configured to receive an extended H.248 protocol message, where the extended H.248 protocol message includes information of local transport addresses to be distributed and domain IDs of network domains corresponding to the local transport addresses to be distributed.

The message processing unit is configured to distribute the local transport addresses in the network domains corresponding to the domain IDs after the receiving unit receives the extended H.248 protocol message, and the distributed local transport addresses correspond to the information of local transport addresses to be distributed.

The embodiment of present aspect further provides a system for distributing local transport addresses, which includes an MGC and an MGW.

The MGC is configured to generate an H.248 protocol message, and send the generated H.248 protocol message, where the H.248 protocol message includes information of local transport addresses to be distributed and domain IDs of network domains corresponding to the local transport addresses to be distributed.

The MGW is configured to receive the H.248 protocol message, and distribute the local transport addresses in the network domains corresponding to the domain IDs, where the distributed local transport addresses correspond to the information of local transport addresses to be distributed.

As seen from the technical solutions provided in the embodiments of the present aspect, the H.248 protocol message adopted in the embodiments of the present aspect can carry the information of local transport addresses to be distributed and the domain IDs of the network domains corresponding to the local transport addresses to be distributed, such that the MGW can distribute the local transport addresses in different network domains according to the requirements, thereby enabling the terminal to communicate with non-designated networks flexibly and enhancing the utilization efficiency of the terminal.

### BRIEF DESCRIPTION OF THE DRAWINGS

FIG 1 is a flowchart of a method for distributing local transport addresses according to an embodiment of the present invention;
FIG 2 shows a structure of an MGC according to an embodiment of the present invention;
FIG 3 shows a structure of an MGW according to an embodiment of the present invention; and
FIG 4 shows a structure of a system for distributing local transport addresses according to an embodiment of the present invention.

### DETAILED DESCRIPTION OF THE EMBODIMENTS

To make the technical solution, objectives and merits of the embodiment of present invention clearer, the embodiment of present invention is hereinafter described in detail with reference to accompanying drawings and preferred embodiments.

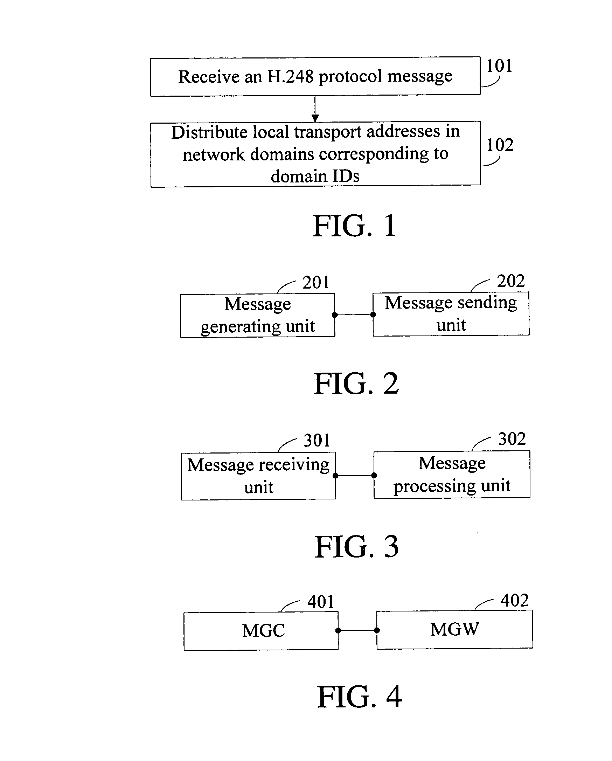

FIG 1 is a flowchart of a method for distributing local transport addresses according to an embodiment of the present invention, which includes the following steps.

In step 101, an H.248 protocol message is received, the H.248 protocol message includes information of local transport addresses to be distributed and domain IDs of network domains corresponding to the local transport addresses to be distributed.

The H.248 protocol is a media gateway control protocol (MGCP). The MGW may distribute a plurality of local transport addresses for a terminal, and the plurality of local transport addresses may correspond to different network domains. Therefore, the H.248 protocol message includes the information of local transport addresses to be distributed and the domain IDs of the network domains corresponding to the local transport addresses to be distributed, such that the local transport addresses are distributed correctly in different network domains.

The local transport addresses to be distributed may correspond to the domain IDs one by one, that is, each local transport address to be distributed has one corresponding domain ID. However, it is also possible that a plurality of local transport addresses to be distributed corresponds to the same domain ID, and if the network domain corresponding to the domain ID is a default network domain, the corresponding domain ID may be not included in the H.248 protocol message. Similarly, if a plurality of local transport addresses to be distributed corresponds to the same domain ID of a non-default network domain, only one domain ID needs to be included in the H.248 protocol message. After the MGW receives the H.248 protocol message, if a domain ID corresponding to a certain local transport address to be distributed is null, the local transport address is distributed in the default network domain or a determined non-default network domain.

The network types of network domain may be an IP network, a VPN, a multi-protocol label switch (MPLS) network, or an asynchronous transfer mode (ATM) network. The IP network may be a network such as an IPv4 network or an IPv6 network. The same network may be divided into one or more domains. For example, the IPv4 network may be divided into a plurality of IP network domains according to the addresses or according to public networks and private networks, and the MGW may be connected to a plurality of IP network domains. The VPN may be implemented through a Layer 3 IPSec tunnel, a Layer 2 virtual local area network (VLAN), or other modes. The VPN may also be divided into a plurality of domains, for example, different domains marked by different VLAN IDs. The local transport addresses distributed in different network domains may have different types, for example, the address distributed in the IP-based domain is an IP address and a port, and the address distributed in the ATM protocol-based domain is an ATM protocol address. The domain ID of the network domain is generally a numeral or a character string, which is equivalent to a number or a name of the domain. Through the unified configuration or planning of the number or name, the domain ID not only identifies the type of the network, but also distinguishes different domains in the network.

The domain ID may be transferred through an attribute field, a signal parameter, or an event parameter of the H.248 protocol, where the attribute field, the signal parameter, or the event parameter may be defined in the existing H.248 package or defined in a newly added H.248 package.

The information of local transport addresses to be distributed is some resource information of the local transport addresses to be distributed, such as a network protocol version, media type, or coding/decoding type. Generally, the information is carried in a local sessions description protocol (SDP), and the local transport address is substituted by a wildcard character in the SDP, indicating that the MGW needs to distribute the local transport address. The information of local transport addresses to be distributed may be included in a local descriptor, and if a text code is adopted, an SDP field in the local descriptor carries the information of local transport addresses to be distributed. A plurality of local transport addresses needs to be distributed and the local transport addresses are located in different domains, so that the domain IDs that need to be carried by the H.248 protocol message are actually a domain ID list, and the list is adapted to indicate a domain for each local transport address. In the list, each row carries one domain ID and location information of the local transport addresses corresponding to the domain ID in the SDP, and the location information may be specifically a group number, a foundation number, and a component-ID in the SDP. Through the location information, the information of each local transport address to be distributed can correspond to the domain ID of the network domain corresponding to each local transport address to be distributed.

In step 102, the local transport addresses are distributed in the network domains corresponding to the domain IDs, where the distributed local transport addresses correspond to the information of local transport addresses. Specifically, bearer information such as coding/decoding, media type or IP version adopted in the local transport address may be distributed.

After the H.248 protocol message is received, the local transport addresses may be distributed in the network domains corresponding to the domain IDs designated by the message.

As seen from the above, the H.248 protocol message adopted in this embodiment carries the information of local transport addresses to be distributed and the domain IDs of the network domains corresponding to the local transport addresses to be distributed, such that the MGW can distribute the local transport addresses in different network domains according to the requirements, thereby enabling the terminal to communicate with non-designated networks flexibly and enhancing the utilization efficiency of the terminal. Furthermore, the terminal is enabled to collect host candidates in a plurality of domains during the NAT traversal, thus enhancing the probability of successful NAT traversal.

For example, the MGC sends an H.248 message to the MGW, to add (ADD) or modify (MOD) a terminal, and a first embodiment of the local SDP in a corresponding ADD message or MOD message is described in the following:
v=0
c=IN IP4 $
m=audio $ RTP/AVP 4
v=0
c=IN IP4 $
m=audio $ RTP/AVP 0

"v=0" indicates that the version of the SDP is 0. "c=IN IP4 $" indicates that the IPv4 protocol is used. "$" indicates that the MGW is required to distribute an IPv4 address for the terminal. "m= audio $ RTP/AVP 4" indicates that a Real-time Transport Protocol (RTP) is used, and the MGW is required to distribute a User Datagram Protocol (UDP) port, which has a media type of "audio" and a static load type of 4, indicating that an audio compression standard G.723 is used. "m= audio $ RTP/AVP 0" indicates that an RTP is used, and the MGW is required to distribute a UDP port, which has a media type of "audio" and a static load type of 0, indicating that an audio compression standard G.711 is used.

In the message requesting the distribution of the local transport address sent to the MGW by the MGC, the transport address part in the information of the local transport address is generally a wildcard character, that is, "$". The transport address part, however, generally includes information such as coding/decoding, media type, IP version adopted by the transport address to be distributed.

In the first embodiment of the local SDP, the MGW is required to distribute IP addresses and ports for the G.723 and the G.711. If the MGC does not denote network domains (such as IP network domains or VPN domains) where the terminal is located, the MGW distributes the IP addresses and the ports in the default IP networks or VPNs. If the MGC denotes the domains (such as IP network domains or VPN domains) where the terminal is located, the MGW distributes the IP addresses and the ports in the designated IP networks or VPNs.

The attribute field in the H.248 protocol message may be extended, and the attribute field may be defined in the existing H.248 package or defined in a new H.248 package. An attribute field provided in an embodiment of the present invention is shown as follows (it is assumed that the attribute name is mdl):
Attribute name: mdl
Data type: character string list

However, in the embodiment of the present invention, the mdl attribute is not limited to being defined by using a character string list. Instead, the mdl attribute may be defined by using a single character string, and when the single character string is adopted, content of the character string list may be separated by decollators.

The attribute may be set on a local control descriptor (localControlDescriptor).

When the mdl attribute is defined by using the character string list, a format of each row in the character string list provided in an embodiment of the present invention is shown as follows:
Group number I Domain ID

The group number is a group number in the SDP, and the domain ID is adapted to identify an IPv4 network domain, an IPv6 network domain, a VPN domain, an MPLS network domain or an ATM network domain.

For example, a value of the mdl attribute provided in an embodiment of the present invention is shown as follows:
"1Id1"
"2Id2"

It indicates that the list has two rows, where the first row "1Id1" indicates that a media having a group number of 1 distributes an IP address and a port in the IP network of "d1", and the second row "2Id2" indicates that a media having a group number of 2 distributes an IP address and a port in the IP network of "d2". The format of the domain ID used in the embodiment of the present invention may be self-defined, as long as the format keeps consistent between the MGW and the MGC. The domain ID may also directly carry a VLAN tag of the VPN and the like.

Therefore, after the MGW receives the H.248 protocol message including the first embodiment of the local SDP and the mdl attribute, the MGW distributes the IP address and port for G.723 in the IP network of "d1", and distributes the IP address and port for G.711 in the IP network of "d2". Meanwhile, the MGW also distributes resources, such as coding/decoding resource and transport bandwidth resource, for the two kinds of codecs.

Taking a local SDP in ICE mode as an example, it is assumed that part of content of a second embodiment of the local SDP delivered by the MGC to the MGW is described in the following:
v=0
c=IN IP4 $
m=audio $ RTP/AVP 4
a=candidate: 1 UDP 2130706431 $ $ typ host
a=candidate:2 1 UDP 2113929215 $ $ typ host

The SDP requires the MGW to distribute IP addresses and ports for two host candidates.

"a=candidate:1 1 UDP 2130706431 $ $ typ host" indicates that this candidate is a host candidate, which uses the UDP, and has a priority level of 2130706431, a foundation number of 1, and a component-ID of 1.

"a=candidate:2 1 UDP 2113929215 $ $ typ host" indicates that this candidate is a host candidate, which uses the UDP, and has a priority level of 2113929215, a foundation number of 2, and a component-ID of 1.

If the two host candidates correspond to different network domains, the H.248 attribute field may be extended, and the attribute field may be defined in the existing H.248 protocol message package or defined in a new H.248 protocol message package.

An attribute field provided in an embodiment of the present invention is shown as follows (it is assumed that the attribute name is icemdl):
Attribute name: icemdl
Data type: character string list

The attribute may be set on a local control descriptor (localControlDescriptor).

A format of each row in the character string list provided in an embodiment of the present invention is shown as follows:
Group number, foundation, component-ID, I Domain ID

The group number is a group number in the SDP; the foundation is a foundation number in the SDP; the component-ID is a component-ID in the SDP; and the domain ID is adapted to identify a network domain such as an IPv4 network domain, an IPv6 network domain, a VPN domain, an MPLS network domain, or an ATM network domain.

For example, a value of an icemdl attribute provided in an embodiment of the present invention is shown as follows:
"1I1I1Id1"
"1I2I1Id2"

It indicates that the list has two rows, where the first row "1I1I1Id1" indicates that a host candidate having the group number of 1, the foundation of 1, and the component-ID of 1 distributes an IP address and a port in the IP network of "d1", and the second row "1I2I1Id2" indicates that a host candidate having the group number of 1, the foundation of 2, and the component-ID of 1 distributes an IP address and a port in the IP network of "d2".

Therefore, after the MGW receives the H.248 protocol message including the second embodiment of the SDP and the icemdl attribute, the MGW distributes the IP address and port in the IP network of "d1" and the IP network of "d2".

When the ICE mode is used, the existing extended attributes in the SDP in ICE mode may be used, for example, an extension attribute name (extension-att-name) field and an extension attribute value (extension-att-value) field in the SDP package in ICE mode may be adopted for carrying the domain IDs. Thus, a third embodiment of the local SDP provided in the embodiment of present invention is shown as follows:
v=0
c=IN IP4 $
m=audio $ RTP/AVP 4
a=candidate: 1 UDP 2130706431 $ $ typ host domain d1
a=candidate:2 1 UDP 2113929215 $ $ typ host domain d2

The SDP requires the MGW to distribute IP addresses and ports for two host candidates. "a=candidate:l 1 UDP 2130706431 $ $ typ host domain d1" indicates that this candidate is a host candidate, which uses the UDP and has a priority level of 2130706431, a foundation of 1, a component-ID of 1, and a domain ID of "d1". "a=candidate:2 1 UDP 2113929215 $ $ typ host domain d2" indicates that this candidate is a host candidate, which uses the UDP and has a priority level of 2113929215, a foundation of 2, a component-ID of 1, and a domain ID of "d2".

Therefore, after the MGW receives the H.248 protocol message including the third embodiment of the local SDP, the MGW distributes the IP address and port in the IP network of "d1" and the IP network of "d2".

As seen from the above, the H.248 protocol message adopted in this embodiment carries the information of local transport addresses to be distributed and the domain IDs of the network domains corresponding to the local transport addresses to be distributed, such that the MGW can distribute the local transport addresses in different network domains according to the requirements, thereby enabling the terminal to communicate with non-designated networks flexibly and enhancing the utilization efficiency of the terminal. Furthermore, the terminal is enabled to collect host candidates in a plurality of domains during the NAT traversal, thus enhancing the probability of successful NAT traversal. It should be noted that, the attribute field, attribute name, and local SDP provided in the embodiments of the present invention are merely implementations of the present invention, instead of limitation of the present invention.

Correspondingly, an MGC is further provided in an embodiment of the present invention. As shown in FIG. 2, the MGC includes a message generating unit 201 and a message sending unit 202.

The message generating unit 201 is configured to generate an extended H.248 protocol message, where the extended H.248 protocol message includes information of local transport addresses to be distributed and domain IDs of network domains corresponding to the local transport addresses to be distributed.

The message sending unit 202 is configured to send the extended H.248 protocol message generated by the message generating unit 201.

As seen from the above, the extended H.248 protocol message generated by the MGC in this embodiment may carry the information of the local transport addresses to be distributed and domain IDs of the network domains corresponding to the local transport addresses to be distributed at the same time, to instruct the MGW to distribute the local transport addresses in a plurality of network domains at the same time, thereby enabling the terminal to communication with a plurality of networks at the same time and enhancing the utilization efficiency of the terminal.

Correspondingly, an MGW is further provided in an embodiment of the present invention. As shown in FIG. 3, the MGW includes a message receiving unit 301 and a message processing unit 302.

The message receiving unit 301 is configured to receive an extended H.248 protocol message, where the extended H.248 protocol message includes information of a plurality of local transport addresses to be distributed and domain IDs of network domains corresponding to each local transport address to be distributed.

The message processing unit 302 is configured to distribute the local transport addresses in the network domains corresponding to the domain IDs after the receiving unit 301 receives the extended H.248 protocol message, where the distributed local transport addresses correspond to the information of local transport addresses.

As seen from the above, the extended H.248 protocol message received by the MGW in this embodiment can carry the information of the local transport addresses to be distributed and domain IDs of the network domains corresponding to the local transport addresses to be distributed, so that the MGW can distribute the local transport addresses in a plurality of network domains at the same time, thereby enabling the terminal to communication with a plurality of networks at the same time and enhancing the utilization efficiency of the terminal. Moreover, the terminal is enabled to collect host candidates in a plurality of domains during the NAT traversal, thus increasing the probability of successful NAT traversal.

FIG 4 shows a structure of a system for distributing local transport addresses according to an embodiment of the present invention. The system includes an MGC 401 and an MGW 402.

The MGC 401 is configured to generate an H.248 protocol message and send the generated H.248 protocol message, where the H.248 protocol message includes information of local transport addresses to be distributed and domain IDs of network domains corresponding to the local transport addresses to be distributed.

The MGW 402 is configured to receive the H.248 protocol message and distribute the local transport addresses in the network domains corresponding to the domain IDs, where the distributed local transport addresses correspond to the information of local transport addresses to be distributed.

As seen from the above, the H.248 protocol message generated by the MGC in this embodiment can carry the information of the local transport addresses to be distributed and the domain IDs of the network domains corresponding to the local transport addresses to be distributed, to instruct the MGW to distribute the local transport addresses in a plurality of network domains at the same time, thereby enabling the terminal to communicate with a plurality of networks at the same time and enhancing the utilization efficiency of the terminal. Moreover, the terminal is enabled to collect host candidates in a plurality of domains during the NAT traversal, thus increasing the probability of successful NAT traversal.

The system for distributing local transport addresses provided in the embodiment of the present invention may be an NGN system.

Those of ordinary skill in the art should understand that all or part of the steps of the method according to the embodiments of the present invention may be implemented by a program instructing relevant hardware. The program may be stored in a computer readable storage medium. When the program is executed, the following steps are performed.

An extended H.248 protocol message is received, where the extended H.248 protocol message includes information of local transport addresses to be distributed and domain IDs of network domains corresponding to the local transport addresses to be distributed.

The local transport addresses are distributed in the network domains corresponding to the domain IDs, where the distributed local transport addresses correspond to the information of local transport addresses to be distributed.

The storage medium may be a ROM, a magnetic disk, or an optical disk.

The method for distributing local transport addresses, the MGW, and the MGC provided in the embodiments of the present invention have been described in detail, and the description about the embodiments is merely intended to facilitate understanding of the method and core ideas of the present invention. Those of ordinary skill in the art can make variations and modifications to the present invention in terms of the specific implementations and application scopes according to the ideas of the present invention. Therefore, the specification shall not be construed as limitations to the present invention.

## Claims

1. A method for distributing local transport addresses, comprising:
receiving, an extended H.248 protocol message, wherein the extended H.248 protocol message comprises information of local transport addresses to be distributed and domain identifiers, IDs, of network domains corresponding to the local transport addresses to be distributed; and
distributing, the local transport addresses in the network domains corresponding to the domain IDs, wherein the distributed local transport addresses correspond to the information of local transport addresses to be distributed.

2. The method according to claim 1, wherein the extended H.248 protocol message carries the domain IDs through an extended attribute field, a signal parameter, or an event parameter.

3. The method according to claim 2, wherein the extended H.248 protocol message further comprises a local descriptor, and the local descriptor carries the information of local transport addresses to be distributed.

4. The method according to claim 2, wherein the extended H.248 protocol message further comprises a local descriptor;
the attribute field, signal parameter, or event parameter carrying the domain IDs further carries a group number in a session description protocol, SDP, field in the local descriptor, and the group number is adapted to indicate position information of the local transport addresses corresponding to the domain IDs in the local descriptor.

5. The method according to claim 2, wherein the attribute field, signal parameter, or event parameter carrying the domain IDs further carries a group number, a foundation number, and a component-ID in an SDP field in a local descriptor, and the group number, the foundation number, and the component-ID are adapted to indicate position information of the local transport addresses corresponding to the domain IDs in the local descriptor.

6. The method according to claim 2, wherein a data type of the attribute field is a character string list.

7. The method according to claim 1, wherein when the information of the local transport addresses to be distributed carried in the H.248 protocol message needs to be distributed in a default network domain, a domain ID of the default network domain carried in the H.248 protocol message is null.

8. The method according to claim 1, wherein network types of the network domains identified by the domain IDs comprise an Internet protocol, IP, network, a virtual private network, VPN, a multi-protocol label switch, MPLS, network, or an asynchronous transfer mode, ATM, network.

9. A computer program product, comprising a computer program code, wherein when the computer program code is executed by a computer, the computer program code enables the computer to execute steps according to any one of claims 1 to 8.

10. A computer readable storage medium, wherein the computer readable storage medium stores a computer program code, and when the computer program code is executed by a computer, the computer program code enables the computer to execute steps according to any one of claims 1 to 8.

11. A media gateway controller, MGC, comprising:
a message generating unit, configured to generate an extended H.248 protocol message, wherein the extended H.248 protocol message comprises information of local transport addresses to be distributed and domain identifiers, IDs, of network domains corresponding to the local transport addresses to be distributed; and
a message sending unit, configured to send the extended H.248 protocol message generated by the message generating unit.

12. A media gateway, MGW, comprising:
a message receiving unit, configured to receive an extended H.248 protocol message, wherein the extended H.248 protocol message comprises information of local transport addresses to be distributed and domain identifiers, IDs, of network domains corresponding to the local transport addresses to be distributed; and
a message processing unit, configured to distribute the local transport addresses in the network domains corresponding to the domain IDs after the receiving unit receives the extended H.248 protocol message, wherein the distributed local transport addresses correspond to the information of local transport addresses to be distributed.

13. A system for distributing local transport addresses, comprising:
a media gateway controller, MGC, configured to generate an H.248 protocol message and send the generated H.248 protocol message, wherein the H.248 protocol message comprises information of local transport addresses to be distributed and domain identifiers, IDs, of network domains corresponding to the local transport addresses to be distributed; and
a media gateway, MGW, configured to receive the H.248 protocol message and distribute the local transport addresses in the network domains corresponding to the domain IDs, wherein the distributed local transport addresses correspond to the information of local transport addresses to be distributed.
